# EUROPEAN PATENT APPLICATION

(11) **EP 4 764 253 A1**
(43) Date of publication of application: **24.06.2026**
(21) Application number: 24881419.6
(22) Date of filing: 10.10.2024
(51) Int. Cl.: F16H 25/20, H02K 7/06, F16H 25/24

(54) **ELECTRIC PUSH ROD**

(30) Priority: 23.10.2023 CN 202322848338 U
(71) Applicant: Zhejiang Jiecang Linear Motion Technology Co., Ltd., Shaoxing, Zhejiang 312500 (CN)
(72) Inventor: ZHANG, Xinjie, Shaoxing, Zhejiang 312500 (CN); SHI, Xin, Shaoxing, Zhejiang 312500 (CN); SHI, Xiaodong, Shaoxing, Zhejiang 312500 (CN)
(74) Representative: karo IP
(86) International application number: PCT/CN2024/123836
(87) International publication number: WO 2025/087053

(57) **Abstract**

The electric actuator disclosed includes an electric motor, a lead screw, a transmission nut, an inner tube, and an outer tube, the inner tube being sleeved over the lead screw, the lead screw being driven to rotate by the electric motor, the transmission nut being threadedly engaged with the lead screw and configured to drive the inner tube to travel linearly along the outer tube in synchronization with rotation of the lead screw, wherein the lead screw comprises a drive end and a retention end, the drive end being drivingly connected to the electric motor, the retention end being provided with a limiting member; the inner tube and the transmission nut are connected such that the transmission nut moves axially along the lead screw towards the retention end to push the inner tube to move in a same direction; the inner tube is adapted to disengage from the transmission nut when receiving a tractive force directed from the drive end towards the retention end; an extension stroke of the inner tube is defined by its outward travel away from the drive end; the inner tube is integrally provided with a stop feature protruding inwardly; when the inner tube reaches a terminal point of the extension stroke under the tractive force directed from the drive end towards the retention end, the stop feature engages with the limiting member, preventing the inner tube from slipping out of the outer tube. The disclosure prevents the inner tube from slipping out, withstands a greater axial slip-out force, and has a high application safety.

## Description

### FIELD

The present disclosure relates to the field of electric actuators, and more particularly relates to an electric actuator.

### BACKGROUND

An electric actuator is a linear-stroke actuator that provides reciprocating push-and-pull movements, which act as an actuating mechanism in various simple or complex processes to enable remote control, centralized control, or automatic control. The electric actuator is mainly applied in home appliances, kitchen appliances, medical devices, and automotive industries as a movement actuating unit.

A conventional electric actuator comprises a drive motor, an outer tube and an inner tube nested coaxially, and a lead screw and a nut threadedly engaged. Its operating principle is as follows: the electric motor, after speed reduction via a gear train or a worm gear drive, drives the lead screw to rotate, while the nut travels axially along the lead screw to drive the inner tube attached to the nut to extend and retract, whereby the electric actuator converts the motor's rotary motion to linear motion; the lead screw is pushed and pulled via the electric motor's forward and reverse rotation, realizing push and pull of a movable platform externally connected thereto; during this process, the inner tube extends and retracts in precise synchronization with the nut's movement. For instance, an electric actuator applied in a hospital bed is typically configured for push-only operation to facilitate bed adjustment. The electric actuator deenergized can also reach its maximum stroke range in a case of manually adjusting the bed deck; however, if excessive force is applied causing the bed deck to extend beyond its operating angle, the inner tube may directly slip out, resulting in actuator damage.

Chinese Patent No. CN 201820814959.2 issued on December 18, 2018 discloses an inner tube retention structure for an electric actuator, comprising a lead screw, a movable tube sleeved over the lead screw, a nut threadedly engaged on the lead screw to drive the movable tube to slide axially, and a guide sleeve mounted over the nut to guide sliding movement of the movable tube; the lead screw comprises a drive end driven to rotate by an electric motor and a retention end; a retention block is securely mounted inside the movable tube, and a stop block configured to stop the retention block is mounted on the retention end, the stop block being connected to the lead screw via a bolt; a washer is disposed between the stop block and the bolt; and a buffer pad is disposed between the stop block and the lead screw. In the conventional technology, the retention block cooperates with the stop block to prevent the inner tube from being disengaged from the nut. However, it has the following drawbacks: 1. since the non-detachable threaded engagement between the nut and the inner tube is not suitable for an extension-only electric actuator, and the retention block primarily serves for protecting the nut from being damaged under stress; 2. the retention block on the movable tube is an external structure, resulting in a complex process for assembling it to the movable tube (i.e., the inner tube), which is inconvenient for assembly, lowers the overall assembly efficiency of the actuator, and increases manufacturing costs.

### SUMMARY

To overcome the above and other drawbacks in conventional technologies, the present disclosure provides an electric actuator, which adopts a detachable arrangement for an inner tube and a transmission nut thereof, so that the inner tube can be manually extended to a maximum stroke, rendering it safe in applications such as a hospital bed; the present disclosure reliably prevents slip-out of the inner tube; in addition, the retention mechanism adopted has a lower cost and is easy to assemble.

The present disclosure adopts a technical solution below:
An electric actuator, comprising an electric motor, a lead screw, a transmission nut, an inner tube, and an outer tube, the inner tube being sleeved over the lead screw, the lead screw being driven to rotate by the electric motor, the transmission nut being in threaded engagement with the lead screw and configured to drive the inner tube to travel linearly along the outer tube in synchronization with rotation of the lead screw, wherein the lead screw comprises a drive end and a retention end, the drive end being drivingly connected to the electric motor, the retention end being provided with a limiting member; the inner tube and the transmission nut are connected such that the transmission nut moves axially along the lead screw towards the retention end to push the inner tube to move in a same direction; the inner tube is adapted to disengage from the transmission nut when receiving a tractive force directed from the drive end towards the retention end; an extension stroke of the inner tube is defined by its outward travel away from the drive end; the inner tube is integrally provided with a stop feature protruding inwardly; when the inner tube reaches a terminal point of the extension stroke under the tractive force directed from the drive end towards the retention end, the stop feature engages with the limiting member, preventing the inner tube from slipping out of the outer tube.

In the electric actuator described *supra,* the stop feature is an annular stop protrusion provided on the inner tube, an inner circumferential edge of the annular stop protrusion protruding toward an axis of the inner tube.

In the electric actuator described *supra,* an outer circumferential edge of the annular stop protrusion is of an annular groove wall structure recessed inward from an outer circumferential surface of the inner tube.

In the electric actuator described *supra,* the inner circumferential edge of the annular stop protrusion has a circular arc-shaped axial cross-section.

In the electric actuator described *supra,* the stop feature is a bump or a boss, and the limiting member is of an annular structure mated with the stop feature.

In the electric actuator described *supra,* the transmission nut comprises a pressure-receiving portion facing the inner tube, the pressure-receiving portion abutting against an end face of the inner tube so that the transmission nut pushes the inner tube to move in a same direction when moving axially along the lead screw towards the retention end, and the pressure-receiving portion is disengaged from the inner tube when the inner tube receives the tractive force directed from the drive end towards the retention end.

As an alternative implementation of the solution described *supra,* the transmission nut comprises an insertion portion and a stop surface facing the inner tube, the insertion portion being inserted into the inner tube axially; the stop surface abuts against the inner tube so that the transmission nut pushes the inner tube to move in a same direction when the transmission nut moves axially along the lead screw towards the retention end; and the stop surface is separated from the inner tube while the insertion portion is disengaged from the inner tube when the inner tube receives the tractive force directed from the drive end towards the retention end.

In the electric actuator described *supra,* a limiting protrusion is provided on one end of the inner tube facing the drive end of the lead screw, a port for the inner tube to access is provided on one end of the outer tube distal from the drive end of the lead screw, and an end cover engageable with the limiting protrusion is provided on the port.

In the electric actuator described *supra,* the limiting protrusion and the end cover engage with each other to form a secondary retention for the inner tube upon engagement failure between the stop feature and the limiting member.

In the electric actuator described *supra,* the limiting member comprises a mounting portion and a limiting section, the mounting portion being detachably connected to one end of the lead screw, the limiting section being connected to the mounting portion and having an edge protruding outward till an exterior circumferential portion of the lead screw, the limiting section being mated with the stop feature.

In the electric actuator described *supra,* the mounting portion is a stud, a threaded hole mated with the stud is formed on the lead screw, and the limiting section is a limiting ring fixedly provided on one end of the stud.

In the electric actuator described *supra,* an outer circumferential edge of the limiting ring protrudes radially outward till the exterior circumferential portion of the lead screw, and an annular dampening groove coaxial with the limiting ring is provided on a circumferential wall of the limiting ring.

In the electric actuator described *supra,* the limiting member and the lead screw are threadedly engaged, and an operating portion is provided on the limiting member, the operating portion being adapted to rotate the limiting member for connection to the lead screw.

The present disclosure offers the following benefits:
An electric actuator according to the present disclosure comprises an electric motor, a lead screw, a transmission nut, an inner tube, and an outer tube, the inner tube being sleeved over the lead screw, the lead screw being driven to rotate by the electric motor, the transmission nut being threadedly engaged with the lead screw and configured to drive the inner tube to move linearly along the outer tube in synchronization with rotation of the lead screw; the lead screw comprises a drive end and a retention end, the drive end being drivingly connected to the electric motor, the retention end being provided with a limiting member; the inner tube and the transmission nut are connected such that the transmission nut moves axially along the lead screw towards the retention end to push the inner tube to move in a same direction; the inner tube is adapted to disengage from the transmission nut when receiving a tractive force directed from the drive end towards the retention end; an extension stroke of the inner tube is defined by its outward travel away from the drive end; the inner tube is integrally provided with a stop feature protruding inwardly; when the inner tube reaches a terminal point of the extension stroke under the tractive force directed from the drive end towards the retention end, the stop feature engages with the limiting member, preventing the inner tube from slipping out of the outer tube.

In the present application, the transmission nut only applies a unidirectional pushing force on the inner tube, enabling the inner tube to be manually extended outward in place, thereby realizing safe application to for example a hospital bed. The retention effect is achieved by engagement between the stop feature integrally formed with the inner tube and the limiting member on the lead screw, which can effectively prevent the inner tube from slipping out and enable the inner tube to withstand a greater axial slip-out force, thereby offering a high application safety; the present disclosure does not affect the performance and appearance of the conventional electric actuator; the stop feature is integrally formed with the inner tube, which enhances structural reliability, facilitates production, and reduces modification costs.

Furthermore, the stop feature is an annular stop protrusion provided on the inner tube, where an inner circumferential edge of the annular stop protrusion protrudes toward an axis of the inner tube. As an implementation of the stop feature, the annular stop protrusion can form a circular limitation, so that it is only needed to configure any portion of the limiting member to protrude from the outer periphery of the lead screw, whereby the limiting member may engage with the annular stop protrusion, ensuring reliable engagement between the annular stop protrusion and the limiting member. Integration between the annular structure of the annular stop protrusion and the inner tube facilitates their formation.

Furthermore, an outer circumferential edge of the annular stop protrusion is of an annular groove wall structure recessed inward from an outer circumferential surface of the inner tube. The annular groove wall of the outer peripheral of the annular stop protrusion reduces the strength of the annular stop protrusion so that the annular stop protrusion has an elastic deformability, resulting in a more reliable engagement between the annular stop protrusion and the limiting member and a reduced wear and deformation caused by rigid collision on the annular stop protrusion and the limiting member.

Furthermore, the inner circumferential edge of the annular stop protrusion has a circular arc-shaped axial cross-section, which prevents stress concentration and facilitates engagement between the annular stop protrusion and the limiting member.

Furthermore, the stop feature is a bump or a boss, and the limiting member is of an annular structure mated with the stop feature. As an alternative implementation of the stop feature, the limiting member adopts a ring-shaped structure, which plays a role of circumferentially continuous limitation. The stop feature in the manner of bump or boss may suffice for mating with the limiting member. In addition, it is convenient to arrange the bump or boss.

Furthermore, the transmission nut comprises a pressure-receiving portion facing the inner tube, the pressure-receiving portion abutting against an end face of the inner tube so that the transmission nut pushes the inner tube to move in a same direction when moving axially along the lead screw towards the retention end, and the pressure-receiving portion is disengaged from the inner tube when the inner tube receives the tractive force directed from the drive end towards the retention end.

Furthermore, the transmission nut comprises an insertion portion and a stop surface facing the inner tube, the insertion portion being inserted into the inner tube axially; the stop surface abuts against the inner tube so that the transmission nut pushes the inner tube to move in a same direction when the transmission nut moves axially along the lead screw towards the retention end; and the stop surface is separated from the inner tube while the insertion portion is disengaged from the inner tube when the inner tube receives the tractive force directed from the drive end towards the retention end.

Furthermore, a limiting protrusion is provided on one end of the inner tube facing the drive end of the lead screw, a port for the inner tube to access is provided on one end of the outer tube distal from the drive end of the lead screw, and an end cover engageable with the limiting protrusion is provided on the port. The engagement between the limiting protrusion and the end cover can prevent the inner tube from slipping out of the outer tube.

Furthermore, the limiting protrusion and the end cover engage with each other to form a secondary retention for the inner tube upon engagement failure between the stop feature and the limiting member. The anti-pinch guard ring and the end cover engage with each other to form a secondary retention, which is activated upon failure of the engagement between the stop feature and the limiting member, thereby enhancing reliability in retaining the inner tube.

Furthermore, the limiting member comprises a mounting portion and a limiting section, the mounting portion being detachably connected to one end of the lead screw, the limiting section being connected to the mounting portion and having an edge protruding outward till an exterior circumferential portion of the lead screw, the limiting section being mated with the stop feature. Due to its detachably connection to the lead screw via the mounting portion, the limiting member may be mounted on the lead screw after the lead screw is assembled to the inner tube, which facilitates the assembly process; after the mounting portion is mounted on the lead screw, the limiting section can engage with the stop feature for preventing the inner tube from slipping out.

Furthermore, the mounting portion is a stud, a threaded hole mated with the stud is formed on the lead screw, and the limiting section is a limiting ring fixedly provided on one end of the stud. The mounting portion in the form of a stud can be threadedly engaged with the threaded hole on the lead screw, which facilitates assembly and disassembly; by fixedly providing the limiting ring on one end of the stud, a reliable limiting effect can be achieved.

Furthermore, an outer circumferential edge of the limiting ring protrudes radially outward till the exterior circumferential portion of the lead screw, and an annular dampening groove coaxial with the limiting ring is provided on a circumferential wall of the limiting ring, which enhances elasticity of the collision surface of the limiting ring with respect to the stop feature and achieves a dampened collision, thereby enhancing reliable engagement between the limiting member and the stop feature.

Furthermore, the limiting member and the lead screw are threadedly engaged, and an operating portion is provided on the limiting member, the operating portion being adapted to rotate the limiting member for connection to the lead screw.

The features and advantages of the present disclosure will be elaborated through exemplary embodiments with reference to the accompanying drawings.

### BRIEF DESCRIPTION OF THE DRAWINGS

Hereinafter, the present disclosure will be further described through exemplary embodiments with reference to the accompanying drawings.
Fig. 1 is an external structural schematical view of an electric actuator according to one embodiment of the present disclosure;
Fig. 2 is an internal section view of the electric actuator according to one embodiment of the present disclosure;
Fig. 3 is an enlarged structural view of part A in Fig. 2;
Fig. 4 is an internal structural view of the electric actuator with its outer tube concealed according to one embodiment of the present disclosure;
Fig. 5 is an exploded view of engagement between an inner tube and a transmission nut in the electric actuator according to one embodiment of the present disclosure; and
Fig. 6 is a structural view of a limiting member in the electric actuator according to one embodiment of the present disclosure.

In the drawings: 1 - lead screw; 101 - limiting member; 102 - mounting portion; 103 - limiting section; 104 -annular dampening groove; 105 - operating portion; 106 - annular wall; 11 - drive end; 12 - retention end;
2 - transmission nut; 201 - small-diameter shaft section; 202 - annular end face; 203 - protruding tooth;
3 - inner tube; 301 - annular engaging groove; 302 - anti-pinch guard ring; 303 - stop feature; 304 - annular stop protrusion; 305 - annular groove wall structure;
4 - outer tube; 401 - end cover.

### DETAILED DESCRIPTION OF EMBODIMENTS

An electric actuator according to the present disclosure comprises an electric motor, a lead screw, a transmission nut, an inner tube, and an outer tube, the inner tube being sleeved over the lead screw, the lead screw being driven to rotate by the electric motor, the transmission nut being threadedly engaged with the lead screw and configured to drive the inner tube to move linearly along the outer tube in synchronization with rotation of the lead screw; the lead screw comprises a drive end and a retention end, the drive end being drivingly connected to the electric motor, the retention end being provided with a limiting member; the inner tube and the transmission nut are connected such that the transmission nut moves axially along the lead screw towards the retention end to push the inner tube to move in a same direction; the inner tube is adapted to disengage from the transmission nut when receiving a tractive force directed from the drive end towards the retention end; an extension stroke of the inner tube is defined by its outward travel away from the drive end; the inner tube is integrally provided with a stop feature protruding inwardly; when the inner tube reaches a terminal point of the extension stroke under the tractive force directed from the drive end towards the retention end, the stop feature engages with the limiting member, preventing the inner tube from slipping out of the outer tube.

In the present disclosure, the retention arrangement for the inner tube is achieved via engagement between the limiting member and the stop feature. In the present disclosure, the drive motor may drive rotation of the lead screw via direct drive or via a transmission member such as a worm gear reducer. The integral transmission formed by the drive motor, the lead screw, the transmission nut, the outer tube, and the inner tube is a common conventional technology in the art, which does not involve specific improvements of the present application and is thus not elaborated here.

In the present disclosure, the transmission nut and the inner tube are detachably arranged. The transmission nut only transmits, to the inner tube, a unidirectional acting force that drives the inner tube to extend outward. When the lead screw rotates in the extension direction, the transmission nut may push the inner tube outward linearly, while when the lead screw rotates in the retraction direction, the transmission nut retracts linearly without exerting any retractive pulling force on the inner tube, i.e., the inner tube returns to its retracted position by an external force or by an external appliance's own gravity; in this sense, the transmission nut exerts an extension-only effect on the inner tube. When the transmission nut fails to move linearly outward, the inner tube, due to its detachable connection with the transmission nut, can be manually pulled to move outward so as to disengage from the transmission nut. Thus, the extension stroke can be achieved through two modes: transmission nut-driven extension and manual extension.

In the present disclosure, the term "a tractive force received by the inner tube from the drive end towards the retention end " refers to a tractive force away from the drive end received by the inner tube, which may be a resultant force formed by multiple forces or a component force derived from a force biasing the axis of the lead screw, where the tractive force is exerted on an outer wall or a distal end of the inner tube manually or by the external appliance itself. The term "limiting member" herein does not specifically refer to a component that fully protrudes from a circumferential surface of the lead screw; instead, it may also refer to a component that partially protrudes outward beyond the exterior circumferential portion of the lead screw to engage with the stop feature; the limiting member may be secured on an end portion or the circumferential surface of the lead screw; exemplarily, the limiting member is secured on an end portion of the lead screw to facilitate assembly.

In the present disclosure, the term "stop feature" refers to any stop structure adapted for reliable engagement with the limiting member, which may be an annular structure coaxial with the inner tube to achieve a reliable circumferential engagement, or a segment of protrusion or a plurality of spaced protrusions (e.g., ribs or lugs), or even a dot-shaped protrusion; in the event of adopting a segmented or dotted protrusion, the limiting member is exemplarily of an annular structure to ensure reliable engagement with the stop feature.

In the present disclosure, the term "the inner tube and the stop feature are integrally formed" means that the stop feature and the inner tube are integrally manufactured; for example, if the inner tube is cast from a metal material, integral casting of the stop feature and the inner tube is realized by changing a casting mold; or, if the inner tube is plastic injection-molded, the stop feature is also integrally injection-molded with the inner tube; or if the inner tube is 3D printed, the stop feature is printed together with the inner tube. The integral forming between the stop feature and the inner tube facilitates their formation, which eliminates a subsequent step of assembling the two components and thus ensures assembly efficiency of the electric actuator.

Hereinafter, the technical solutions of the embodiments of the present disclosure will be explained and described with reference to the accompanying drawings of the embodiments of the present disclosure. However, the embodiments described below are only the exemplary embodiments of the present disclosure, not all of them. All other embodiments derived by those skilled in the art without exercise of inventive efforts based on the embodiments provided in the present disclosure shall fall within the scope of protection of the present disclosure.

In the description of the present disclosure, it should be noted that terms such as "center", "upper", "lower", "left", "right", "vertical", "horizontal", "inner", "outer", "front", "rear" and the like indicate orientational or positional relationships based on those illustrated in the accompanying drawings, which are only for the convenience of describing the present disclosure and simplifying the description, and do not indicate or imply that a referred-to device or element must have a specific orientation or be constructed and operated in a specific orientation. Therefore, such terms shall not be construed as limitations to the present disclosure. In addition, the terms "first", "second", "third" are provided only for descriptive purposes and shall not be construed as indicating or implying relative importance.

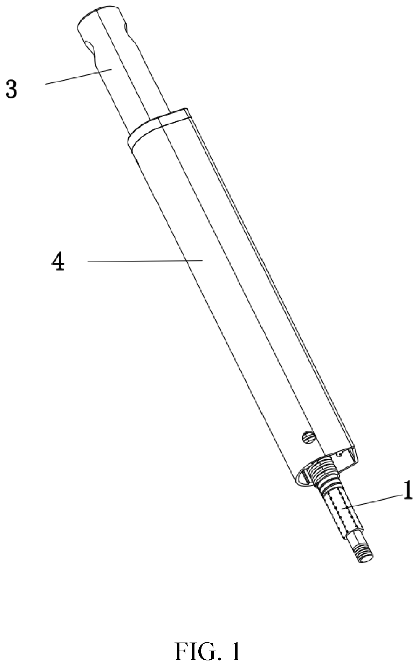

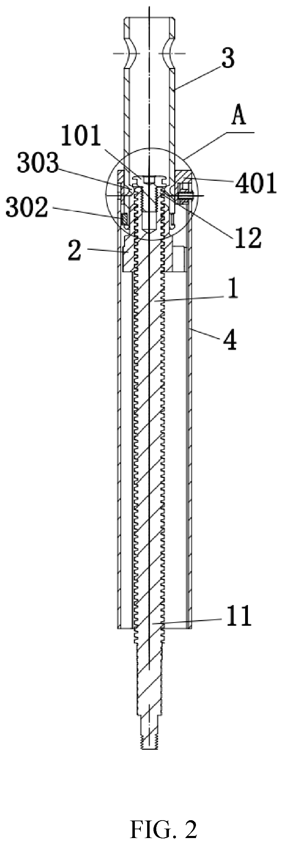

Referring to FIG. 1 to FIG. 6, an electric actuator according to one embodiment of the present disclosure comprises an electric motor, a lead screw 1, a transmission nut 2, an inner tube 3, and an outer tube 4. The inner tube 3 is sleeved over the lead screw 1. The lead screw 1 is driven to rotate by the electric motor. The transmission nut 2 is threadedly engaged on the lead screw 1 to drive the inner tube 3 to move linearly along the outer tube in synchronization with rotation of the lead screw 1. The lead screw 1 comprises a drive end 11 and a retention end 12. The drive end 11 is drivingly connected to the electric motor. The retention end 12 is provided with a limiting member 101. The inner tube 3 and the transmission nut 2 are connected such that the transmission nut 2 moves axially along the lead screw 1 towards the retention end 12 to push the inner tube 3 in a same direction; the inner tube 3 is adapted to disengage from the transmission nut 2 when receiving a tractive force from the drive end 11 towards the retention end 12; an extension stroke of the inner tube 3 is defined by its outward travel away from the drive end 11. In this embodiment, the extension stroke refers to upward travel of the inner tube 3 from a lower end of the lead screw 1 till the position illustrated in FIG. 2. FIG. 2 illustrates an engagement position between the inner tube 3 and the lead screw 1 when the inner tube travels to the terminal point of the extension stroke. The inner tube 3 is integrally provided with a stop feature 303 protruding inwardly; when the inner tube 3 reaches the terminal point of the extension stroke under the tractive force from the drive end 11 towards the retention end 12, the stop feature 303 engages with the limiting member 101, thereby preventing the inner tube 3 from slipping out of the outer tube 4.

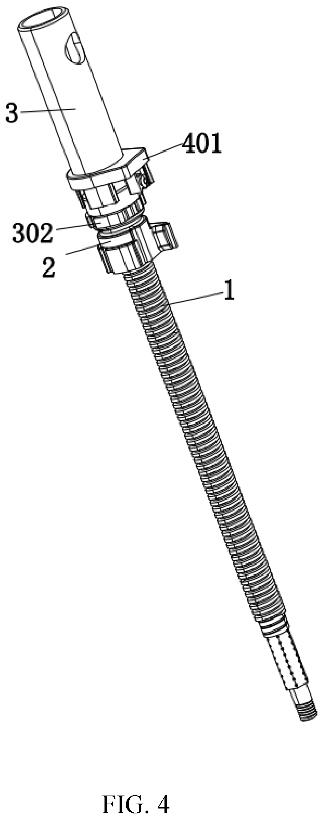

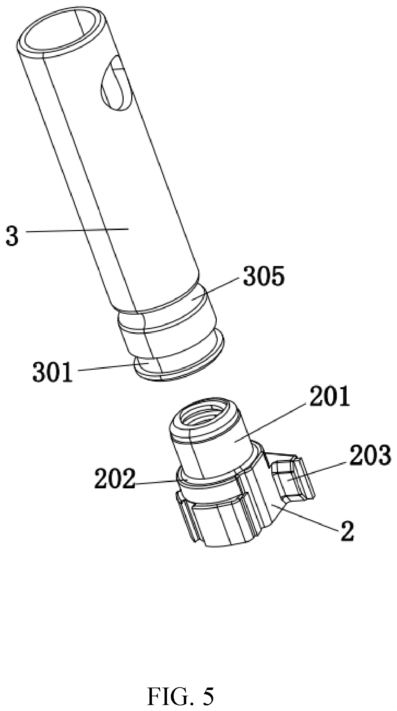

To enable the transmission nut 2 to only exert an extension-only effect on the inner tube 3 so that the inner tube 3 can be disengaged from the transmission nut 2 under an external force to extend independently in a direction away from the drive end 11, the transmission nut 2 in this embodiment comprises an insertion portion and a stop surface facing the inner tube 3. The insertion portion is inserted into the inner tube 3 along the axis of the inner tube 3; the stop surface abuts against the inner tube 3, so that the transmission nut 2 pushes the inner tube 3 in a same direction when moving axially along the lead screw 1 toward the retention end 12, while the stop surface is separated from the inner tube 3 and the insertion portion is disengaged from the inner tube 3 when the inner tube 3 receives the tractive force from the drive end 11 to the retention end 12. As shown in FIG. 4 and FIG. 5, the transmission nut 2 comprises a small-diameter shaft section 201 inserted into the inner tube 3 with a clearance therebetween, and an annular end face 202 adapted to transmit a pushing force to the inner tube 3 is provided on a tail end of the small-diameter shaft section 201, i.e., the small-diameter shaft section 201 serves as the insertion portion, and the annular end face 202 serves as the stop surface; when the inner tube 3 is pushed out under the action of the transmission nut 2, the small-diameter shaft section 201 is inserted into the inner tube 3, while the annular end face 202 provides a pushing force to push the inner tube 3 outward. When the inner tube 3 extends outward under an external force, the inner tube 3 is disengaged from the small-diameter shaft section 201 and moves outward, while the transmission nut 2 remains in engagement with the lead screw 1 at its initial position. To realize retraction of the inner tube 3, self-weight of the external appliance or an external force is leveraged to drive the inner tube 3 to retract until the small-diameter shaft section 201 of the transmission nut 2 is re-inserted into the inner tube 3 and stopped by the annular end face 202. When the transmission nut 2 is directly driven by the lead screw 1 to reach the innermost end distal from the inner tube 3, the inner tube 3 can then be retracted to the innermost end position inside the outer tube. A protruding tooth 203 is arranged on the transmission nut 2 to achieve circumferential limiting of the outer tube, so that the outer tube limits rotation of the protruding tooth 203, enabling the transmission nut 2 to guide linearly inside the outer tube.

As a simple alternative to the solution described *supra,* the insertion portion may also be configured as a sleeve surrounding an end portion of the inner tube 3, a stop surface being provided inside the sleeve to engage with the inner tube, the sleeve being fitted over the inner tube 3 to thereby radially limit the inner tube 3.

As another implementation of the solution, the insertion portion is cancelled; the transmission nut 2 comprises a pressure-receiving portion facing the inner tube 3, the pressure-receiving portion abutting against an end face of the inner tube 3 so that the transmission nut 2 pushes the inner tube 3 in a same direction when moving axially along the lead screw 1 toward the retention end 12, the pressure-receiving portion being disengaged from the inner tube 3 when the inner tube 3 receives the tractive force from the drive end 11 to the retention end 12. In this alternative solution, the small-diameter shaft section of the transmission nut 2 in the examples shown in FIG. 4 and FIG. 5 is cancelled; instead, the annular end face acts as the pressure-receiving portion, the pressure-receiving portion being disengaged from the inner tube 3 when the inner tube 3 receives the tractive force from the drive end 11 to the retention end 12, realizing reliable, unidirectional push of the transmission nut 2 with respect to the inner tube 3 while facilitating disengagement of the transmission nut 2 from the inner tube 3.

Furthermore, in a case that the inner tube 3 is rotatably connected to a mounting section of the external appliance via a rotating component, the inner tube 3 and the transmission nut 2 may be threadedly connected, so that the inner tube 3 may be simply rotated and unscrewed to disengage from the transmission nut 2 and extend independently.

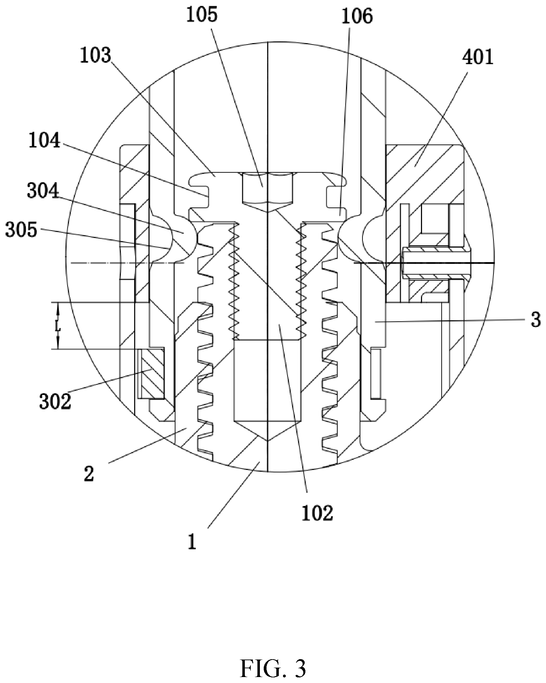

An electric actuator in one embodiment of the present disclosure on the basis of the embodiment described *supra* is configured such that a limiting protrusion is provided on one end of the inner tube 3 facing the drive end 11 of the lead screw, and a port for the inner tube 3 to access is provided on one end of the outer tube 4 distal from the drive end 11 of the lead screw, an end cover 401 being provided on the port and configured to engage with the limiting protrusion. The end cover 401 is secured to the outer tube via a stud. An annular engaging groove 301 is formed on an outer peripheral wall of one end of the inner tube 3. The limiting protrusion is an anti-pinch guard ring 302 fixedly mounted in the annular engaging groove 301. The anti-pinch guard ring 302 and the end cover 401 can engage with each other to form a secondary retention for the inner tube 3 upon failure of the engagement between the stop feature 303 and the limiting member 101. As illustrated in FIG. 3, when the stop feature 303 and the limiting member 101 are engaged in place, a distance L still remains between the anti-pinch guard ring 302 and the end cover 401; upon engagement failure between the stop feature 303 and the limiting member 101, the inner tube 3 and the anti-pinch guard ring 302 continue moving outward by the distance L until the anti-pinch guard ring 302 engages with the end cover 401; this secondary engagement serves as a fail-safe mechanism to prevent unintended slip-out of the inner tube 3.

In the present application, the stop feature 303 and the inner tube 3 are integrally formed. To assemble them as an integrated piece, the stop feature is first mounted to the lead screw 1 in place; then, the end of the lead screw 1 is inserted into the inner tube 3 from the end where the stop feature is not mounted; next, the transmission nut 2 is screwed onto the lead screw 1 and the anti-pinch guard ring 302 is mounted on the inner tube 3 during this process; finally, the inner tube 3 is assembled with the outer tube, followed by attaching the end cover 401 to the outer tube to complete preliminary assembly of the electric actuator; afterwards, the lead screw 1 may be drivingly connected to the transmission arrangement and the electric motor. Compared with conventional technologies, no extra steps are added to the assembly process of the electric actuator, which ensures assembly efficiency of the electric actuator and reduces the additional cost for the retention mechanism.

An electric actuator according to one embodiment of the present disclosure is configured such that the stop feature 303 is an annular stop protrusion 304 provided on the inner tube 3, where an inner circumferential edge of the annular stop protrusion 304 protrudes toward an axis of the inner tube 3 to thereby constitute a circular limitation; to engage with the annular stop protrusion 304, it is only needed to configure any portion of the limiting member 101 to protrude from the outer periphery of the lead screw 1, ensuring reliable engagement between the annular stop protrusion 304 and the limiting member 101. Integration between the annular stop protrusion 304 and the inner tube 3 facilitates their formation. In this embodiment, the limiting member 101 comprises a mounting portion 102 detachably connected to one end of the lead screw 1, and a limiting section 103 connected to the mounting portion 102 and having an edge that protrudes radially outward beyond an outer periphery of the lead screw 1, the limiting section 103 being mated with the stop feature 303. Exemplarily, as illustrated in FIG. 2 and FIG. 3, the mounting portion 102 is a stud, a threaded hole mated with the stud is formed on the lead screw 1, and the limiting section 103 is a limiting ring fixedly provided on one end of the stud. In addition, the mounting portion 102 may also be a threaded hole, so that it is only needed to arrange a stud mated with the threaded hole on the lead screw 1, which may also realize threaded assembly between the mounting portion 102 and the lead screw 1.

On the basis of the embodiments described *supra,* as shown in FIG. 2, FIG. 3 and FIG. 5, an outer circumferential edge of the annular stop protrusion 304 is configured as an annular groove wall structure 305 recessed inward from the outer circumferential surface of the inner tube 3. The annular groove wall structure 305 has a circular arc-shaped axial cross-section, where both axial edges of the annular groove wall structure 305 are filleted at the transition to the outer circumferential surface of the inner tube 3 to reduce stress concentration. Owing to the annular groove wall structure 305, the inner tube 3 has a certain elasticity at the annular stop protrusion 304, enabling the inner tube 3 to undergo a certain elastic deformation, which reduces rigid collision between the annular stop protrusion 304 and the limiting member 101 when the annular stop protrusion 304 is engaged with the limiting member 101, thereby preventing slip-out of the inner tube 3 and extending the service life of the annular stop protrusion 304 and the limiting member 101. In this embodiment, the inner circumferential edge of the annular stop protrusion 304 also has a circular arc-shaped axial cross-section, which also prevents stress concentration and facilitates engagement between the annular stop protrusion 304 and the limiting member 101.

As a simple alternative to the solution described *supra,* in a case that the limiting member 101 is of an annular structure mated with the stop feature 303, the stop feature 303 may be a bump or a boss, or any other similar protrusion structure. There may be provided only one bump or boss or a plurality of bumps or bosses distributed in a circumferential array around the axis of the inner tube 3. Reliable engagement between the stop feature 303 and the limiting member 101 can also be realized by the protrusion structure mated with the annular limiting member 101. To enhance the strength of the stop feature 303, it exemplarily adopts an annular structure, i.e., an annular protrusion structure protruding toward the axis of the inner tube 3.

On the basis of the embodiments illustrated in FIG. 2 and FIG. 3, to further extend the service life of the limiting member 101 and the stop feature 303 and reduce the impact caused by the rigid collision therebetween, an outer circumferential edge of the limiting ring protrudes radially outward till the exterior circumferential portion of the lead screw 1, and an annular dampening groove 104 coaxial with the limiting ring is arranged on an inner circumferential edge of the limiting ring. The limiting ring is formed with two opposite annular walls 106 on both sides of the annular dampening groove 104, one of the annular walls 106 colliding with the stop feature 303. The annular dampening groove 104 reduces the strength of the interface of the limiting ring colliding with the stop feature 303; due to the smaller thickness of the annular walls 106, outer ends of the annular walls 106 have a certain elasticity, achieving a reliable engagement with the stop feature 303.

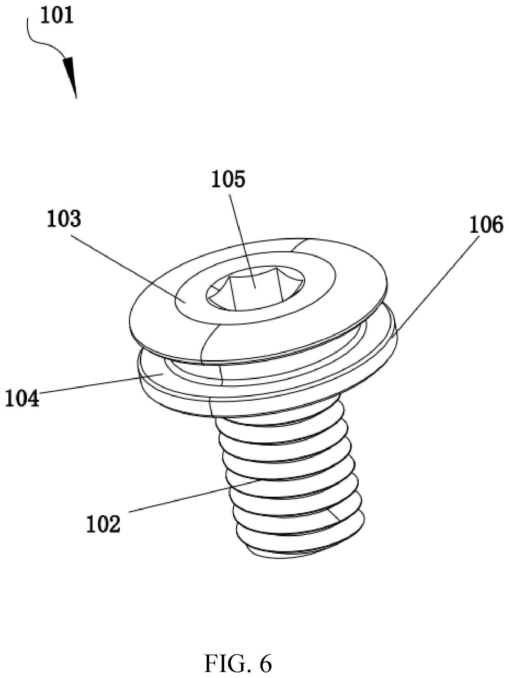

An electric actuator according to one embodiment of the present disclosure is configured such that the limiting member 101 and the lead screw 1 are threadedly connected, and an operating portion 105 is provided on the limiting member 101; the limiting member 101 can be rotated via the operating portion 105 to implement connection to the lead screw 1. As illustrated in FIG. 6, the operating portion 105 is a blind hexagon socket, which can be mated with a hexagon key to drive rotation of the limiting member 101.

As a simple alternative to the solution described *supra,* the operating portion 105 may also be configured as a square prism, a hexagonal prism or any other prismatic structure protruding outward from the limiting member 101, which can be mated with socket wrenches of different specifications to rotate the limiting member 101, thereby realizing threaded fixation between the limiting member 101 and the lead screw 1.

In the present disclosure, the transmission nut 2 only applies a unidirectional pushing force on the inner tube 3, enabling the inner tube 3 to be manually extended outward in place, thereby realizing safe application to for example a hospital bed. The retention effect is achieved by engagement between the stop feature 303 integrally formed with the inner tube 3 and the limiting member 101 on the lead screw 1, which can effectively prevent the inner tube 3 from slipping out and enable the inner tube to withstand a greater axial slip-out force, thereby offering a high application safety. The retention arrangement for the inner tube 3 is achieved by a primary retention engagement between the limiting member 101 and the stop feature 303 and a secondary retention engagement between the anti-pinch guard ring 302 and the end cover 401, which ensures a high fail-safe reliability. The present disclosure does not affect the performance or appearance of the conventional electric actuator; integral formation between the stop feature 303 and the inner tube 3 enhances structural reliability, facilitates production, and reduces modification costs.

What have been described supra are only exemplary embodiments of the present disclosure; however, the scope of protection of the present disclosure is not limited thereto; any person skilled in the art shall appreciate that the present disclosure includes, but is not limited to, the contents illustrated in the drawings and described in the exemplary embodiments. Any modifications without departing from the functions or structural principles of the present disclosure shall fall within the scope of the appended claims.

## Claims

1. An electric actuator, comprising an electric motor, a lead screw, a transmission nut, an inner tube, and an outer tube, the inner tube being sleeved over the lead screw, the lead screw being driven to rotate by the electric motor, the transmission nut being threadedly engaged with the lead screw and configured to drive the inner tube to travel linearly along the outer tube in synchronization with rotation of the lead screw, wherein the lead screw comprises a drive end and a retention end, the drive end being drivingly connected to the electric motor, the retention end being provided with a limiting member; the inner tube and the transmission nut are connected such that the transmission nut moves axially along the lead screw towards the retention end to push the inner tube to move in a same direction; the inner tube is adapted to disengage from the transmission nut when receiving a tractive force directed from the drive end towards the retention end; an extension stroke of the inner tube is defined by its outward travel away from the drive end; the inner tube is integrally provided with a stop feature protruding inwardly; when the inner tube reaches a terminal point of the extension stroke under the tractive force directed from the drive end towards the retention end, the stop feature engages with the limiting member, preventing the inner tube from slipping out of the outer tube.

2. The electric actuator according to claim 1, wherein the stop feature is an annular stop protrusion provided on the inner tube, an inner circumferential edge of the annular stop protrusion protruding toward an axis of the inner tube.

3. The electric actuator according to claim 2, wherein an outer circumferential edge of the annular stop protrusion is of an annular groove wall structure recessed inward from an outer circumferential surface of the inner tube.

4. The electric actuator according to claim 1, wherein the transmission nut comprises a pressure-receiving portion facing the inner tube, the pressure-receiving portion abutting against an end face of the inner tube so that the transmission nut pushes the inner tube to move in a same direction when moving axially along the lead screw towards the retention end, and the pressure-receiving portion is disengaged from the inner tube when the inner tube receives the tractive force directed from the drive end towards the retention end.

5. The electric actuator according to claim 1, wherein the transmission nut comprises an insertion portion and a stop surface facing the inner tube, the insertion portion being inserted into the inner tube axially; the stop surface abuts against the inner tube so that the transmission nut pushes the inner tube to move in a same direction when the transmission nut moves axially along the lead screw towards the retention end; and the stop surface is separated from the inner tube while the insertion portion is disengaged from the inner tube when the inner tube receives the tractive force directed from the drive end towards the retention end.

6. The electric actuator according to claim 1, wherein a limiting protrusion is provided on one end of the inner tube facing the drive end of the lead screw, a port for the inner tube to access is provided on one end of the outer tube distal from the drive end of the lead screw, and an end cover engageable with the limiting protrusion is provided on the port.

7. The electric actuator according to claim 6, wherein the limiting protrusion and the end cover engage with each other to form a secondary retention for the inner tube upon engagement failure between the stop feature and the limiting member.

8. The electric actuator according to any one of claims 1 to 7, wherein the limiting member comprises a mounting portion and a limiting section, the mounting portion being detachably connected to one end of the lead screw, the limiting section being connected to the mounting portion and having an edge protruding outward till an exterior circumferential portion of the lead screw, the limiting section being mated with the stop feature.

9. The electric actuator according to claim 8, wherein an outer circumferential edge of the limiting ring protrudes radially outward till the exterior circumferential portion of the lead screw, and an annular dampening groove coaxial with the limiting ring is provided on a circumferential wall of the limiting ring.

10. The electric actuator according to any one of claims 1 to 7, wherein the limiting member and the lead screw are threadedly engaged, and an operating portion is provided on the limiting member, the operating portion being adapted to rotate the limiting member for connection to the lead screw.
